(19) Europäisches Patentamt
European Patent Office
Office européen des brevets

(11) **EP 4 675 498 A1**

(12) **EUROPEAN PATENT APPLICATION**

(43) Date of publication:
**07.01.2026 Bulletin 2026/02**

(21) Application number: 24306067.0

(22) Date of filing: **01.07.2024**

(51) International Patent Classification (IPC):
**G06N 3/0455** (2023.01)    **H04N 19/91** (2014.01)

(52) Cooperative Patent Classification (CPC):
**H04N 19/91; G06N 3/045; G06N 3/0455;
G06N 3/08; G06N 3/082; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **DAMODARAN, Bharath Bhushan
  56000 VANNES (FR)**
• **SCHNITZLER, Francois
  56890 SAINT AVE (FR)**
• **LE MEUR, Olivier
  35160 TALENSAC (FR)**
• **LAMBERT, Anne
  35250 SAINT-AUBIN-D'AUBIGNE (FR)**

(74) Representative: **Vossius & Partner
Patentanwälte Rechtsanwälte mbB
Siebertstraße 3
81675 München (DE)**

(54) **VIDEO SPECIFIC DICTIONARY LEARNING FOR IMPLICIT NEURAL COMPRESSION**

(57)    Methods and apparatus are provided for encoding and subsequent decoding of video data by using a learnt video specific dictionary for implicit neural compression. An implicit neural representation comprising a head layer and a tail layer is used with approximations to the head layer parameters. The approximations are determined with combinations of atoms of a learnt video specific dictionary. In one embodiment, the head layer approximations and tail layer parameters are encoded in a bitstream. The dictionary is learnt at the decoder. In another embodiment, a dictionary is sent in the bitstream. At decoding, a reconstructed image is computed using transmitted INR parameters.

480 input signal

| Learn INR parameters | 482 |
| Encode INR parameters | 484 |

488 bitstream

Figure 2

EP 4 675 498 A1

**Description**

TECHNICAL FIELD

At least one of the present embodiments generally relates to a method or an apparatus for video compression using an implicit neural representation.

BACKGROUND

The general aspects described herein relate to approaches for implicit neural compression. While not yet standardized, MPEG is exploring these technologies. INR based compression techniques are relatively new and are investigated by research groups in academia and in industry. INR is used for many signals, in particular 3D (three-dimensional) scenes or objects.

SUMMARY

At least one of the present embodiments generally relates to a method or an apparatus for compressing a set of images or videos using an implicit neural representation (INR).

According to a first aspect, there is provided a method. The method comprises steps for determining parameters of an implicit neural representation comprising head and tail layers, for a portion of video; determining sparse coefficients to approximate said head layer using combinations of a video specific dictionary; and encoding said sparse coefficients and said tail layer into a bitstream, wherein said video specific dictionary has been encoded

According to a second aspect, there is provided another method. The method comprises steps for parsing a bitstream for information indicative of a video specific dictionary; decoding sparse coefficients representative of a head layer of an implicit neural representation for a portion of video and parameters of a tail layer of said an implicit neural representation; determining an approximation of parameters for said head layer of the implicit neural representation; constructing the implicit neural representation with the approximation of parameters for said head layer and with parameters of said tail layer; and, reconstruct the portion of video using the constructed implicit neural representation.

According to another aspect, there is provided an apparatus. The apparatus comprises a processor and a memory. The processor can be configured to operate on digital video data according to the aforementioned methods.

According to another aspect, there is provided an apparatus. The apparatus comprises a processor and a memory. The processor can be configured to encode a block of video or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates an example of a simple neural network which can be used for Implicit Neural Representations (INR).
Figure 2 illustrates a typical process to encode a signal using an INR.
Figure 3 illustrates one embodiment of a first method under the described aspects.

Figure 4 illustrates one embodiment of a second method under the described aspects

Figure 5 illustrates one embodiment of an apparatus under the described aspects.

Figure 6 illustrates a standard, generic, video compression scheme.

Figure 7 illustrates a standard, generic, video decompression scheme.

Figure 8 illustrates a processor-based system for encoding/decoding under the general described aspects.

DETAILED DESCRIPTION

The embodiments described here are in the field of learning-based compression, such as through implicit neural representations (INR) and generally relate to efficient cloud streaming, for example, in the context of two-dimensional signals and video compression.

To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

The described embodiments are in the context of implicit neural representations, used for example, for video compression. One goal of these embodiments is to develop new approaches for neural compression. While not yet standardized, MPEG is exploring these technologies. For the topic of these embodiments, INR stands for Implicit Neural Representations. INR based compression techniques are relatively new and are investigated by research groups in academia and in a few companies and the number of papers is growing exponentially. One primary focus of the described embodiments is 2D (two-dimensional) and video compression, but INR is investigated for many other signals, in particular 3D (three-dimensional) scenes or objects. Furthermore, these approaches have a far lower computational complexity than end-to-end neural compression approaches.

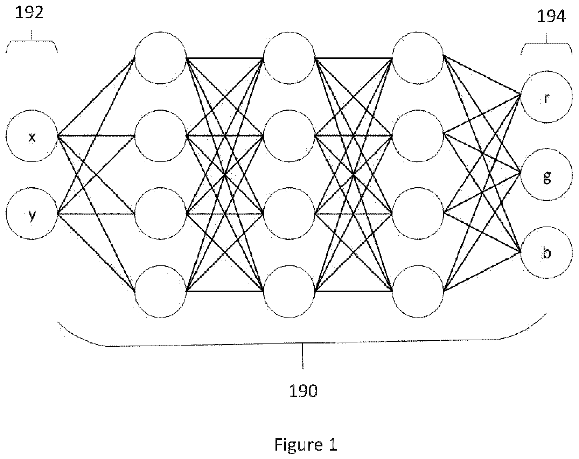

Figure 1 illustrates a simple neural network used for implicit neural representation (INR). Such a neural network used for INR can be referred to as an INR network. INR parameterizes a signal as a function 190, which takes coordinates 192 as input and outputs values 194 of a signal at these coordinates. INR has recently been applied to images, videos or 3D objects among other applications. In the image case, the inputs 192 can be pixel coordinates $(x,y)$ and the INR may output 194 the color values $(r, g, b)$ or $(y, u, v)$ of the input pixel. The input coordinates may be modified by a transformation before being used as input for the neural network. This transformation can be a Fourier mapping, coordinate transformation, normalization etc.

The INR can be used to reconstruct a signal by computing the signal values for every necessary coordinate input. It can be used to upsample a signal by generating output for input coordinates corresponding to the upsampled pixels, for example the mean of the coordinates between two consecutive pixels for upsampling by a factor of 2.

An INR network 190 is typically a neural network, composed of multiple neural layers, such as fully connected layers. In Figure 1, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

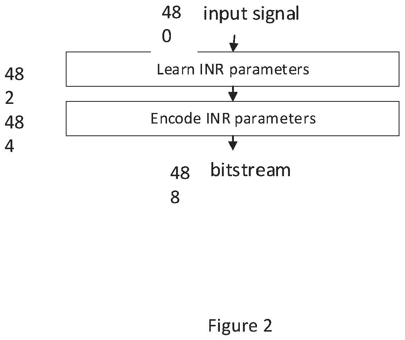

Figure 2 illustrates a typical process to encode a signal 480 using an INR. This is done by optimizing the weights $\theta$ (or a subset of them) of the INR network to reconstruct the signal 482 and optionally encoding them 484 to create the output bitstream 488. For an image $I$ of size $(M \times N)$, the weights $\theta$ can for example be optimized by minimizing the following loss function:

$$Loss = D(I, f_{\boldsymbol{\theta}}) + \lambda\, R(\theta)$$

$$D_{MSE} = \frac{1}{MN} \sum_{x,y} (I(x,y) - f_{\boldsymbol{\theta}}(x,y))^2 \quad,$$

where $D$ is a distortion which quantifies the difference between the reconstructed image by $f_\theta$ to the original image $I$, $R$ is the bitrate of the encoded parameters and $\lambda$, a trade-off parameter between $D$ and $R$. $D$ could be any differentiable distortion measure, such as mean squared error as in the second equation. M and N are the width and height of an image. Other metrics such as LPIPS (learned perceptual image patch similarity) can also be used in this case. The optimization of the weights $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs (x,y) for all $x \in \{0,1, ...,255\}$ and $y \in \{0,1, ...,255\}$. Other choices are possible, for example to upsample, downsample or extend the original image.

Another approach has described how a signal, or a part of a signal can be better encoded by approximating some parameters of the INR network using a dictionary approximation. By doing so, the INR network can be encoded by the weights of the non-approximated parts and some additional information that describes the approximated parts. In the remaining description, we will take as an example an INR divided into head h and tail $t$ layers, as $f_\theta = t_{\theta_t} \, h_{\theta_h}$, and approximate $\theta_h$. This is an example of a decomposition into a composited representation, and other types of decompositions could be used without any loss of generality. For the approximation, we propose to learn a dictionary $\boldsymbol{D} = [d_1, d_2, ... d_K]$ with K INR atoms so that each of the head layers is approximated (represented) using a sparse linear combination of the atoms of the dictionary. That is

$$\widehat{\theta}_h = \boldsymbol{D}\boldsymbol{\gamma} \approx \theta_h$$

The sparse coefficients $\gamma$ are for example approximated by optimizing the following loss function,

$$\arg \min_{\boldsymbol{\gamma}} \|\theta_h - \boldsymbol{D}\boldsymbol{\gamma}\| + \alpha \|\boldsymbol{\gamma}\|_1, \qquad (3)$$

where $\theta_h$ are the weights of the head layers, $\boldsymbol{D}$ is the learnt dictionary, and $\gamma$ are the sparse coefficients to be optimized. To enforce the sparsity in the coefficient vector, the L1 norm is used and $\alpha$ is the trade-off between the two terms in the equation.

In another approach, we have described how a signal or a part of a signal can be encoded by approximating some layers of the INR network using a dictionary approximation. This also allows encoding the INR network by the weights of the non-approximated parts and some additional information that describes the approximated parts.

In these previous approaches, the general/universal dictionary $D$ is learnt on the diverse large collection images/video frames or on the patches generated from diverse collection images/video frames.

In the described embodiments herein, it is proposed to learn a dictionary specific to each video that is to be encoded.

When encoding part of a signal by approximating parameters using a dictionary, this dictionary is learnt on a large collection of images. This learnt dictionary is global such that it aims to capture most of the patterns existing in natural signals (image/video). Learning such a universal dictionary is challenging both in terms of representation capacity and optimization perspective.

So, the described embodiments propose learning a dictionary which is specific to each underlying video to be encoded.

This description contains the following contributions: learning a video specific dictionary for INR representation, describing the encoding procedure, describing the resulting modified bitstream, and describing the procedure that will be used to decode the signal.

It is proposed to decompose the parameters of the INR network $f_\theta$ into at least two parts and to approximate the parameters of at least one part of the INR network using a dictionary approximation.

By doing so, the INR network can be encoded by the weights of the non-approximated parts and some additional information that describes the approximated parts. There are multiple possible approaches to decompose the INR network into parts. For example, a part may consist of the bias and/or the weights and/or the parameters of the non-linear functions and/or any subset of these elements. Such a subset may for example be defined as a subset of the layers, such as the last k layers, or the bias of the last k layers, or a subset of the neurons.

In the remainder of this description, an example using an INR divided into head and tail layers is used, as $f_\theta = f_{\theta_t} \, f_{\theta_h}$. This is an example of a decomposition into a composited representation, and other types of decompositions could be used without any loss of generality.

Let $X$ be an instance of video consisting of $N$ frames $\{X_1, X_2, ...,X_N\}$ to be transmitted. One idea of the described embodiments is to learn the dictionary of INR functions on the first frame $X_1$, and to use this dictionary to approximate the INR functions of the rest of the frames. The dictionary of INR functions on the first frame is computed as follows:

1) First frame $X_1$, is partitioned by the coding tree units (CTU) (the partition could be superpixel, segmentation map, or any other possible partitions), let us assume that there are K partitions. Each CTU is approximated by the INR function, which takes normalized pixel co-ordinates as the input and outputs the pixel intensities (RGB or YUV or any color

$$f_{\theta_k} = f_{\theta_{t_k}} \cdot f_{\theta_{h_k}}$$

space). Let these INR functions be $f_{\theta_1}, f_{\theta_2}, ..., f_{\theta_K}$, each function is of the form  , $k = 1, ..., K$ where

a.  $f_{\theta_{h_k}}$  be the head function,

b.  $f_{\theta_{t_k}}$  be the tail function of the $k^{th}$ CTU

c. $\theta_{h_k}, \theta_{t_k}$ be the head and tail parameters of the $k^{th}$ CTU.

2) Let $\Theta_H \in R^{L \times K} = [\theta_{h_1}, \theta_{h_2}, ..., \theta_{h_K}]$, be the collection of head parameters of the INR functions belonging to all the CTU's. Learning the dictionary of head parameters is formulated as follows

$$\arg\min_{\Gamma, D} \|\Theta_H - D\Gamma\| + \alpha \|\Gamma\|_1, \tag{4}$$

Where $D \in R^{L \times P} = [\theta_{a1}, \theta_{a2}, ..., \theta_{aP}]$ is the dictionary ($\theta_{ai}$, is the $i^{th}$ dictionary atom) and $\Gamma \in \mathbf{R}^{P \times K}$ is the sparse coefficient matrix, $\|.\|_1$ is the L1 norm to enforce the sparsity in the coefficient matrix $\Gamma$ and $\alpha$ is the trade-off parameter to control the level of the sparsity: the higher the value, the greater the level of sparsity.

The solution to the problem can be found using alternative minimization by fixing one variable and optimizing another alternatively. More specifically, given the dictionary $D$ the sparse coefficient matrix $\Gamma$ is optimized using any sparse solvers, such as Lasso [2]. In the next step, the sparse coefficient matrix $\Gamma$ is fixed, and optimized for the dictionary $D$ using (stochastic) gradient descent or co-ordinate descent method. These alternative steps are continued until convergence or certain number of iterations.

Further, we can also use group sparsity regularizer such as group lasso to introduce group sparsity in the dictionary atoms.

3) Given the learnt dictionary D, for any given CTU, the reconstruction based on the learnt dictionary can be performed in two ways:

a. **Head parameter approximation:** For a given CTU's INR's head function parameters are approximated as

$$\hat{\gamma} = \arg\min_{\gamma} \|\theta_h - D\gamma\| + \alpha \|\gamma\|_1, \tag{5}$$

$$\hat{\theta}_h = D\hat{\gamma} \tag{6}$$

Where $\hat{\gamma}$ is the optimized sparse coefficient vector, $\alpha$ is the trade-off to control the sparsity, and $\hat{\theta}_h$ is the approximated head parameters of the given CTU. Then the reconstruction of the given CTU is performed as

$$\widehat{I_{xy}} = f_{\theta_t} \cdot f_{\hat{\theta}_h}(x, y), \forall (x, y) \in CTU \tag{7}$$

Where $\theta_t$ is the trained parameter of the tail network corresponding to given CTU, where $\widehat{I_{xy}}$ is the reconstructed patch of the CTU partition, and $I_{xy}$ is the corresponding patch of the ground truth CTU partition, and (x,y) is the normalized coordinates of the CTU partition.

b. **Mixture of Experts:** Given the learnt dictionary D, reconstruction the given CTU can be formulated as the mixture of expert's model as

$$\widehat{I_{xy}} = f_{\theta_t} \cdot \sum_p \gamma_p f_{\theta_{a_p}}(x, y), \forall (x, y) \in CTU, \tag{8}$$

Where $\theta_{\alpha p}$ is the $p^{th}$ dictionary atom. It remains to define how the values of mixture co-efficient $\gamma_p$ can be obtained.

This learnt dictionary **D** on the first frame needs to be encoded in the bit-stream and to be transmitted to the decoder side. Thus, this dictionary is known to the decoder for the rest of the frames. Since the dictionary **D** is transmitted only once and known for all the remaining frames, the transmission cost of the **D** is amortized over all the frames. In many cases this transmission cost is negligible.

The above steps have described how the dictionary is learnt on the first frame, and how to use this dictionary for the reconstruction of the given CTU.

The following describes the encoding procedure with two different approaches: **Head parameter approximation and Mixture of Experts.** First, it is described how a frame can be encoded using the Mixture of Expert model.

### Encoding with the mixture of expert model

A prior approach describes encoding with the universal dictionary.

Given the learnt dictionary on the first frame, the reconstruction of the given CTU is performed as in the Eq. 8. For each CTU, we need to compute the mixture coefficients in Eq. (8) during encoding and also the tail parameters. These parameters are computed by minimizing the following loss function,

$$\arg\min_{\gamma,\theta_t} \|I_{xy} - f_{\theta_t}.\Sigma_p \gamma_p f_{\theta_{a_p}}(x,y)\|_2 \qquad (9)$$

Where $f_{\theta_t}$ is the tail network, and $f_{\theta_{a_p}}$ is the head network with $p^{th}$ dictionary atom, $\gamma$ is a vector of mixture coefficients with $\gamma_p$ the $p^{th}$ coefficient, $I_{xy}$ is the pixel intensities of the CTU block. Once the unknown parameters are learnt they should be encoded in the bit-stream and transmitted.

The encoding procedure is as follows

- For each frame $I$,

  ∘ for each CTU's,

    ▪ Find the parameters $\theta_t$ of the tail network and $\gamma$ as described in eq (9).
    ▪ Perform Entropic coding of $\theta_t$ for the tail network and $\gamma$ or store the $\theta_t$ and $\gamma$

  ∘ Let the tail parameters of all the CTU's be $\Theta_T^l = \left[\theta_{t,}^{CTU_1}\theta_{t,...,}^{CTU_2}\theta_{t,}^{CTU_K}\right]$, and mixture coefficients be $\Gamma^l = [\gamma_{CTU_1}, ..., \gamma_{CTU_K}]$.

  ∘ These $\Theta_T^l$ and $\Gamma^l$ are encoded in the bit-stream with entropic coding directly or they can be quantized using fixed bit quantization then encoded in the bit-stream, for example as follows:

- the maximal value is found: $a_m = \max_i \gamma_i$.

- The values are normalized as: $\gamma_i^n = \gamma_i/a_m$

- Fixed bit quantization using $2^q$ bits is performed to obtain the symbols to be transmitted $\hat{\gamma}_i = Q(\gamma_i^n) = \mathrm{round}\left(\gamma_i^n * \{(2)^q - 1\}\right)$

  Similarly, also for the $\Theta_T^l$.

The entropic coding can be performed individually for each CTU or at once for all the CTU's together. In the latter-case, the entropic coding might be more effective since there are more symbols, entropic coding might explore well the redundancy.

The encoding techniques of these parameters may be standardized and known both to the encoder and decoder. The encoder may also be allowed to choose the encoding technique. In that case, the chosen technique must be included in the bitstream and potentially entropy coded.

For the decoding from the bitstream and the reconstruction

○ First decode the dictionary **D** from the bitstream and construct the mixture of expert network $f_{\theta_{a_p}}{'}s$ with dictionary atoms.

○ Second, for each frame

- If parameters of all the CTU's are encoded together

  - Decode the mixture coefficients $\Gamma^l$ if all the mixture coefficients of CTU's are encoded together.
  - Decode the tail parameters the $\Theta_T^l$ if all the tail parameters of CTU's encoded together.
  - Decode the quantization parameters which are necessary for the dequantization step.
  - Perform the corresponding dequantization step.

- If not, for each CTU block

  - Decode the mixture coefficients $\gamma_{CTU}$
  - Decode the tail parameters the $\theta_{t,}^{CTU}$
  - Decode the quantization parameters which are necessary for the dequantization step and perform dequantization.
  - Construct the INR tail network $f_{\theta_{t,}^{CTU}}$ with the decoded parameter.
  - Perform reconstruction of the CTU block as,

$$\widehat{I_{xy}} = f_{\theta_t} \cdot \sum_p \gamma_p^{CTU} f_{\theta_{a_p}(x,y)}$$

**Encoding with Mixture of Experts using Dictionary Fine-tuning**

In an embodiment, the dictionary can be fine-tuned on the first frame together with tail-parameters and mixture coefficients, in this way the dictionary is adapted to the reconstruction task, rather than relying on approximating the parameters of the head network.
The dictionary fine-tuning is formulated as

$$\arg\min_{\gamma,\theta_t,\Delta} \| I_{xy} - f_{\theta_t} \cdot \sum_p \gamma_p f_{(\theta_{a_p}+\Delta_p)}(x,y) \|_2, \qquad (10)$$

Where $\Delta_p$ is the update of the $p^{th}$ dictionary atom through the fine-tuning of Eq. (10). Once the Equation 10 is optimized, the encoding of the frames with respect to the fine-tuned dictionary is performed similar to section describing encoding with the mixture of expert model. That is, for each frame and for all the CTU's we need to write the mixture coefficients and parameters of tail network into the bit-stream to reconstruct at the decoder side.

The difference between Equation (9) and (10) is that, dictionary fine-tuning will take more computational time for the first frame, and for the rest of the frames the computation time is similar, but the expected reconstruction quality will be higher with dictionary fine-tuning.
The initial dictionary values before fine tuning can be obtained by different methods. In one possible variant, the initial dictionary values are obtained by approximating the parameters of the models learned on the first frame, as described in equation (4). In another possible variant, the initial dictionary values are random.
The decoding procedure is also similar to section describing encoding with the mixture of expert model.

**Encoding with Head parameter approximation**

Given the dictionary **D**, encoding with head network parameter approximation is as follows:
For the given frame, compute the CTU partitions, and learn the INR network comprising head and tail layers ($\theta_t$) for each CTU partition. Here the idea, is to approximate the head layer with the sparse combination of dictionary atoms. Let $\theta_h$ and $\theta_t$ be parameters of the head and tail layers. Instead of writing $\theta_h$ into the bit-stream which is costly because by design head layers have large capacity thus having a greater number of parameters, it is approximated by the sparse dictionary combination as below

$$\hat{\gamma} = \arg\min_{\gamma} \|\boldsymbol{\theta}_h - \mathbf{D}\boldsymbol{\gamma}\| + \alpha \|\boldsymbol{\gamma}\|_{1,} \qquad (11)$$

$$\widehat{\boldsymbol{\theta}}_h = \boldsymbol{D}\widehat{\boldsymbol{\gamma}}, \qquad (12)$$

and we write the $\hat{\gamma}$ into the bit-stream. Since the dictionary is already transmitted to the decoder side, using $\hat{\gamma}$ we can approximate the head parameters during decoding using Equation (12).

The Encoding can be summarized as

- For each frame

    ◦ For each CTU partition

        1. Learn INR, and extract $\theta_h$ and $\theta_t$
        2. Compute $\hat{\gamma}$ as in Eq (11)
        3. Encode $\hat{\gamma}$ and $\theta_t$ into the bit-stream with fixed bit-quantization and entropic coding

Optionally, step 3 can be omitted, and we gather all the $\hat{\gamma}$'s of the CTU into a single array, and then perform entropic coding. Similarly, we gather all the $\theta_t$'s of the CTU into a single array, and then perform entropic coding.

The decoding from the bitstream and the reconstruction procedure is defined as

- First, decode the dictionary **D** from the bitstream.
- For each frame

    ◦ For each CTU partition

        ▪ Decode the $\hat{\gamma}$ from the bitstream.
        ▪ Decode the $\theta_t$ from the bitstream.
        ▪ Decode the quantization parameters if any, for the dequantization step and perform dequantization step
        ▪ Compute the approximation of the head parameters from the decoded dictionary and mixture coefficients as

$$\widehat{\boldsymbol{\theta}}_h = \boldsymbol{D}\widehat{\boldsymbol{\gamma}}$$

        ▪ Construct the INR network with head layers $f_{\hat{\theta}_h}$ and tail layers $f_{\theta_t}$, and perform the reconstruction as

$$\widehat{I_{xy}} = f_{\boldsymbol{\theta}_t} \cdot f_{\widehat{\boldsymbol{\theta}}_h}(x, y), \forall (x, y) \in CTU$$

Before the head layers, there might be embedding layers of the coordinates, for example Fourier feature embedding or any other embedding techniques. These embedding layers can be generated at the decoding side without needing to encode them in the bitstream.

In an embodiment, the dictionary learning can be performed at any frame, or set of frames or even whole video. The dictionary learning can be also performed at multiple scales.

The described embodiments are related to learning based compression. Those techniques are currently being investigated by MPEG, and there is a new ad-hoc group which focuses on the implicit neural network-based compression.

INR based compression techniques are relatively new and are investigated by research groups in academia and in few companies.

Furthermore, these approaches have a far lower computational complexity than end-to-end neural compression approaches. The INR methods should become local (collection of local INR) to reach an acceptable performance.

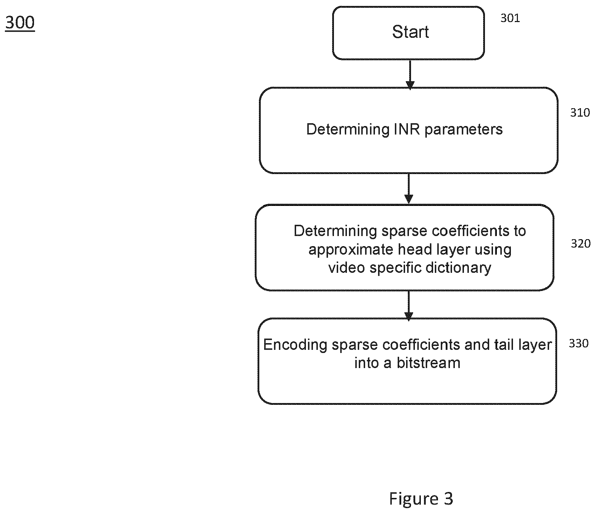

One embodiment of a method 300 under the general aspects described here is shown in Figure 3. The method commences at start block 301 and control proceeds to block 310 for determining parameters of an implicit neural representation comprising head and tail layers, for a portion of video. Control proceeds from block 310 to block 320 for determining sparse coefficients to approximate said head layer using combinations of a video specific dictionary. Control proceeds from block 320 to block 330 for encoding said sparse coefficients and said tail layer into a bitstream, wherein said video specific dictionary has been encoded.

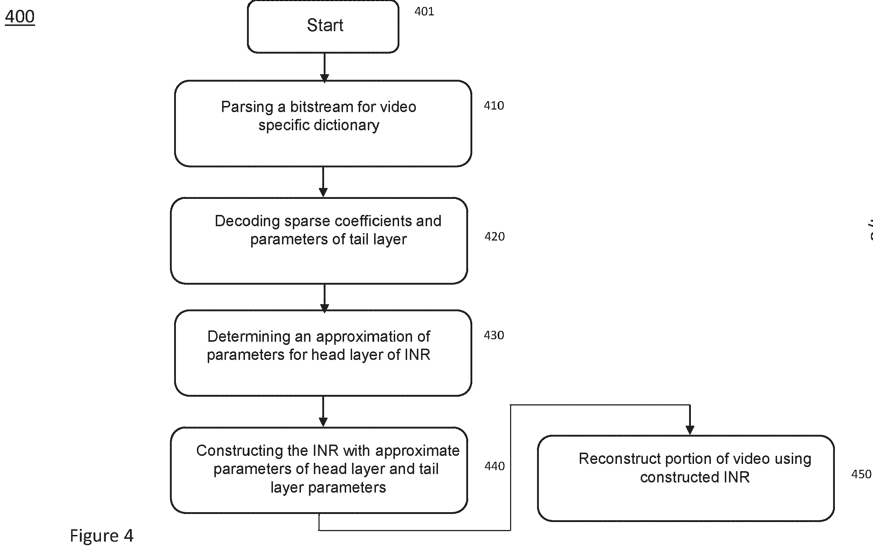

One embodiment of a method 400 under the general aspects described here is shown in Figure 4. The method commences at start block 401 and control proceeds to block 410 for parsing a bitstream for information indicative of a video specific dictionary. Control proceeds from block 410 to block 420 for decoding sparse coefficients representative of a head layer of an implicit neural representation for a portion of video and parameters of a tail layer of said an implicit neural representation. Control proceeds from block 420 to block 430 for determining an approximation of parameters for said head layer of the implicit neural representation. Control proceeds from block 430 to block 440 for constructing the implicit neural representation with the approximation of parameters for said head layer and with parameters of said tail layer. Control proceeds from block 440 to block 450 for reconstructing the portion of video using the constructed implicit neural representation.

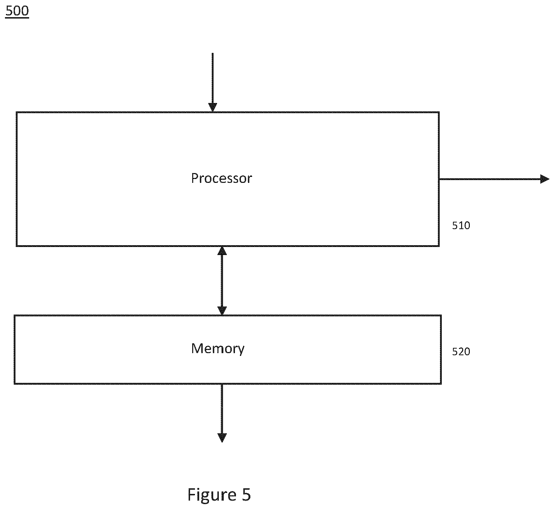

Figure 5 shows one embodiment of an apparatus 500 for encoding, decoding, compressing or decompressing, or filtering of video data using the aforementioned methods. The apparatus comprises Processor 510 and can be interconnected to a memory 520 through at least one port. Both Processor 510 and memory 520 can also have one or more additional interconnections to external connections.

Processor 510 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

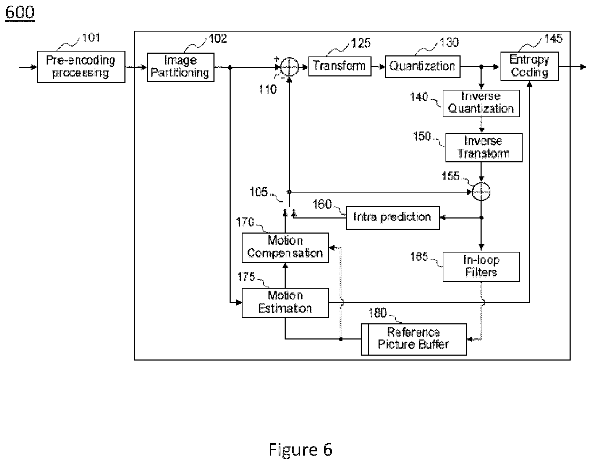

The aspects described and contemplated in this application can be implemented in many different forms. Figures 6, 7, and 8 provide some embodiments, but other embodiments are contemplated and the discussion of Figures 6, 7, and 8 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

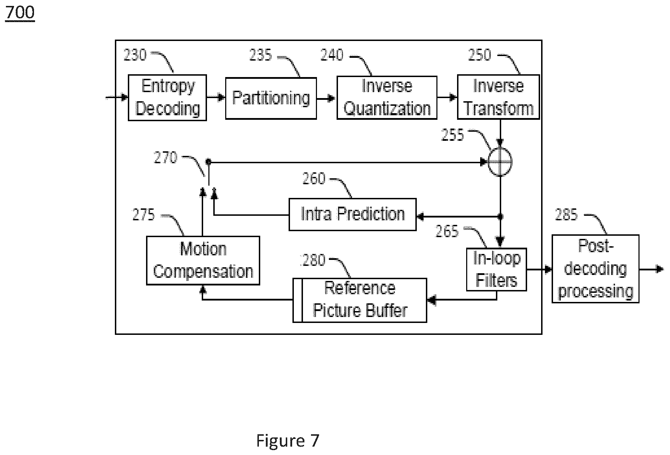

Various methods and other aspects described in this application can be used to modify modules, for example, the intra prediction, entropy coding, and/or decoding modules (160, 260, 145, 230), of a video encoder 100 and decoder 200 as shown in Figure 6 and Figure 7. Moreover, the present aspects are not limited to VVC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 6 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 7 illustrates a block diagram of a video decoder 200. In the decoder 200, a bitstream is decoded by the decoder elements as described below. Video decoder 200 generally performs a decoding pass reciprocal to the encoding pass as described in Figure 6. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

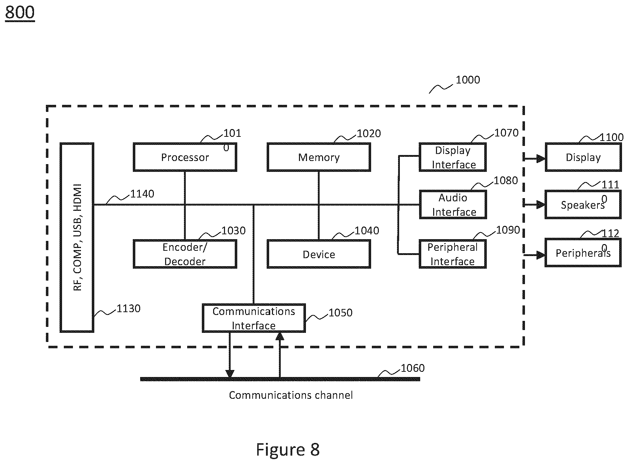

Figure 8 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 8, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises approximating a head layer of an implicit neural representation of a neural network using approximate parameters based on combinations of a video specific dictionary on a portion of video for compression/decompression.

At least one embodiment comprises the above embodiment wherein parameters of a tail layer are encoded in an encoded bitstream with said approximate parameters of said head layer.

At least one embodiment comprises the above embodiment wherein parameters of the implicit neural representation are encoded into a bitstream used to reconstruct the image.

At least one embodiment comprises parsing a bitstream for implicit neural representation parameters and decoding and reconstructing video images from a bitstream of video data.

At least one embodiment comprises any encoding or decoding operation based on the above operations.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

determining parameters of an implicit neural representation comprising head and tail layers, for a portion of video;
determining sparse coefficients to approximate said head layer using combinations of a video specific dictionary; and
encoding said sparse coefficients and said tail layer into a bitstream, wherein said video specific dictionary has been encoded.

2. An apparatus, comprising:

a memory, and
a processor, configured to perform:

determining parameters of an implicit neural representation comprising head and tail layers, for a portion of video;
determining sparse coefficients to approximate said head layer using combinations of a video specific dictionary; and
encoding said sparse coefficients and said tail layer into a bitstream, wherein said video specific dictionary has been encoded.

3. A method, comprising:

parsing a bitstream for information indicative of a video specific dictionary;
decoding sparse coefficients representative of a head layer of an implicit neural representation for a portion of video and parameters of a tail layer of said an implicit neural representation;
determining an approximation of parameters for said head layer of the implicit neural representation;
constructing the implicit neural representation with the approximation of parameters for said head layer and with parameters of said tail layer; and,
reconstruct the portion of video using the constructed implicit neural representation.

4. An apparatus, comprising:

a memory, and
a processor, configured to perform:

parsing a bitstream for information indicative of a video specific dictionary;
decoding sparse coefficients representative of a head layer of an implicit neural representation for a portion of video and parameters of a tail layer of said an implicit neural representation;
determining an approximation of parameters for said head layer of the implicit neural representation;
constructing the implicit neural representation with the approximation of parameters for said head layer and with parameters of said tail layer; and,
reconstruct the portion of video using the constructed implicit neural representation.

5. The method of any one of Claims 1 or 3, or the apparatus of any one of Claims 2 or 4, wherein said video specific dictionary is signaled in a bitstream at the beginning of a frame.

6. The method of any one of Claims 1 or 3 or 5, or the apparatus of any one of Claims 2, 4 or 5, wherein said tail layer is stored.

7. The method of any one of Claims 1 or 3 or 5 through 6, or the apparatus of any one of Claims 2 or 4 through 6, wherein said bitstream information is entropy encoded in the bitstream.

8. The method of any one of Claims 1 or 5 through 7 or the apparatus of any one of Claims 2 or 5 through 7, wherein said video specific dictionary is fine-tuned with subsequent portions of video.

9. The method of any one of Claims 1 or 5 through 8, or the apparatus of any one of Claims 2 or 5 through 8, wherein approximation of parameters of said head layer is determined through a minimization.

10. The method of any one of Claims 1 or 5 through 9, or the apparatus of any one of Claims 2 or 5 through 9, wherein said portion of video comprises a coding tree unit.

11. The method of any one of Claims 1 or 5 through 10, or the apparatus of any one of Claims 2 or 5 through 10, wherein said video specific dictionary is learnt on a first frame and used for subsequent frames.

12. A device comprising:

an apparatus according to Claim 2; and
at least one of (i) an antenna configured to receive a signal, the signal including a video block, (ii) a band limiter configured to limit the received signal to a band of frequencies that includes the video block, and (iii) a display configured to display an output representative of the video block.

13. A non-transitory computer readable medium containing data content generated according to the method of any one of claims 1, 3, or 5 through 11, or by the apparatus of any one of claims 2, 4, or 5 through 11, for playback using a processor.

14. A signal comprising video data generated according to the method of any one of claims 1, or 3, or 5 through 11, or by the apparatus of any one of claims 2, or 4, or 5 through 11, for playback using a processor.

15. A non-transitory computer program product comprising instructions which, when the program is executed by a computer, cause the computer to carry out the method of any one of claims 1, or 3 or 5 through 11.

Figure 1

Figure 2

300

Start 301

Determining INR parameters 310

Determining sparse coefficients to approximate head layer using video specific dictionary 320

Encoding sparse coefficients and tail layer into a bitstream 330

Figure 3

EP 4 675 498 A1

**400**

```
            ┌─────────────────┐ 401
            │      Start       │
            └─────────────────┘
                     │
                     ▼
        ┌───────────────────────────┐ 410
        │  Parsing a bitstream for   │
        │  video specific dictionary │
        └───────────────────────────┘
                     │
                     ▼
        ┌───────────────────────────┐ 420
        │ Decoding sparse coefficients│
        │   and parameters of tail    │
        │           layer             │
        └───────────────────────────┘
                     │
                     ▼
        ┌───────────────────────────┐ 430
        │ Determining an approximation│
        │  of parameters for head     │
        │       layer of INR          │
        └───────────────────────────┘
                     │
                     ▼
  ┌─────────────────────────────┐ 440        ┌─────────────────────────────┐ 450
  │ Constructing the INR with    │──────────▶│  Reconstruct portion of      │
  │ approximate parameters of    │           │  video using constructed INR │
  │ head layer and tail layer    │           └─────────────────────────────┘
  │       parameters             │
  └─────────────────────────────┘
```

Figure 4

500

```
        ┌─────────────────────────────┐
        │                             │
        │                             │
        │         Processor           │──────────────▶
        │                             │
        │                             │   510
        └─────────────────────────────┘
                      ▲
                      │
                      ▼
        ┌─────────────────────────────┐
        │                             │
        │          Memory             │   520
        │                             │
        └─────────────────────────────┘
                      │
                      ▼
```

Figure 5

Figure 6

Figure 7

700

Figure 8

## EUROPEAN SEARCH REPORT

**Application Number**

EP 24 30 6067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/078892 A1 (INTERDIGITAL CE PATENT HOLDINGS SAS [FR]) 18 April 2024 (2024-04-18) * page 1, line 20 - page 2, line 29 * * page 3, line 31 - page 8, line 33 * ----- | 1-15 | INV. G06N3/0455 H04N19/91 |
| A | Anonymous: "Sparse dictionary learning", Wikipedia, 19 November 2018 (2018-11-19), XP055678775, Retrieved from the Internet: URL:https://en.wikipedia.org/w/index.php?title=Sparse_dictionary_learning&oldid=869561590 [retrieved on 2020-03-23] * the whole document * ----- | 1-15 | |
| A | KOBAYASHI K ET AL: "AN LSI FOR LOW BIT-RATE IMAGE COMPRESSION USING VECTOR QUANTIZATION", IEICE TRANSACTIONS ON ELECTRONICS, INSTITUTE OF ELECTRONICS, TOKYO, JP, vol. E81-C, no. 5, 1 May 1998 (1998-05-01) , pages 718-723, XP000834538, ISSN: 0916-8524 * sections 2 and 7 * ----- | 1-15 | **TECHNICAL FIELDS SEARCHED (IPC)** G06N H04N |

The present search report has been drawn up for all claims

| Place of search | Date of completion of the search | Examiner |
|---|---|---|
| The Hague | 25 November 2024 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 30 6067

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| WO 2024078892 A1 | 18-04-2024 | NONE | |

For more details about this annex : see Official Journal of the European Patent Office, No. 12/82

EPO FORM P0459